# EUROPEAN PATENT APPLICATION

(11) **EP 3 799 744 A1**
(43) Date of publication of application: **07.04.2021**
(21) Application number: 20209978.4
(22) Date of filing: 14.11.2017
(51) Int. Cl.: A24F 40/60, A24F 40/50, A24F 40/57, A24F 40/65, A24F 40/10

(54) **PHOTOELECTRIC PROXIMITY SENSOR FOR GESTURE-BASED CONTROL OF AN AEROSOL DELIVERY DEVICE**

(30) Priority: 14.11.2016 US 201615350839
(62) Divisional of application: 17809031.2
(71) Applicant: RAI Strategic Holdings, Inc., Winston-Salem NC 27101 (US)
(72) Inventor: SUR, Rajesh, Winston-Salem, North Carolina 27106 (US); HUNT, Eric, T., Pfafftown, North Carolina 27040 (US); SEARS, Stephen, Benson, Siler City, North Carolina 27344 (US)
(74) Representative: Hoeger, Stellrecht & Partner Patentanwälte mbB

(57) **Abstract**

An aerosol delivery device (100) is provided that comprises an atomizer (222) controllable to generate an aerosol from an aerosol precursor composition, a photoelectric proximity sensor (248) configured to detect a motion of an object nearby the aerosol delivery device that defines a gesture, and without requiring any physical contact with the object, the photoelectric sensor including a light source (250) and a photodetector (252) configured to respectively emit light toward the object and receive a reflection of the light off the object from which the photoelectric sensor is configured to detect the motion of the object, the photoelectric proximity sensor being configured to convert the motion to an electrical signal, and a control component (208) configured to receive the electrical signal, recognize the gesture and an operation associated with the gesture based on the electrical signal, and control at least one functional element of the aerosol delivery device to perform the operation.

## Description

The present disclosure is a divisional application and relates to the subject matter disclosed in European patent application No. 17 809 031.2 of November 14, 2017 which is incorporated herein by reference in its entirety and for all purposes.

### TECHNOLOGICAL FIELD

The present disclosure relates to aerosol delivery devices such as smoking articles, and more particularly to aerosol delivery devices that may utilize electrically generated heat for the production of aerosol (e.g., smoking articles commonly referred to as electronic cigarettes). The smoking articles may be configured to heat an aerosol precursor, which may incorporate materials that may be made or derived from, or otherwise incorporate tobacco, the precursor being capable of forming an inhalable substance for human consumption.

### BACKGROUND

Many devices have been proposed through the years as improvements upon, or alternatives to, smoking products that require combusting tobacco for use. Many of those devices purportedly have been designed to provide the sensations associated with cigarette, cigar, or pipe smoking, but without delivering considerable quantities of incomplete combustion and pyrolysis products that result from the burning of tobacco. To this end, there have been proposed numerous alternative smoking products, flavor generators, and medicinal inhalers that utilize electrical energy to vaporize or heat a volatile material, or attempt to provide the sensations of cigarette, cigar, or pipe smoking without burning tobacco to a significant degree. See, for example, the various alternative smoking articles, aerosol delivery devices and heat generating sources set forth in the background art described in U.S. Pat. No. 8,881,737 to Collett et al., U.S. Pat. App. Pub. No. 2013/0255702 to Griffith Jr. et al., U.S. Pat. App. Pub. No. 2014/0000638 to Sebastian et al., U.S. Pat. App. Pub. No. 2014/0096781 to Sears et al., U.S. Pat. App. Pub. No. 2014/0096782 to Ampolini et al., U.S. Pat. App. Pub. No. 2015/0059780 to Davis et al., and U.S. Pat. App. Ser. No. 15/222,615 to Watson et al., filed July 28, 2016, all of which are incorporated herein by reference. See also, for example, the various implementations of products and heating configurations described in the background sections of U.S. Pat. Nos. 5,388,594 to Counts et al. and 8,079,371 to Robinson et al., which are incorporated by reference.

However, it may be desirable to provide aerosol delivery devices with improved electronics such as may extend usability of the devices.

### BRIEF SUMMARY

The present disclosure relates to aerosol delivery devices, methods of forming such devices, and elements of such devices. The present disclosure includes, without limitation, the following example implementations.
**Example Implementation 1:** An aerosol delivery device comprising at least one housing enclosing a reservoir configured to retain an aerosol precursor composition; a heating element controllable to activate and vaporize components of the aerosol precursor composition; a photoelectric proximity sensor configured to detect a motion of an object nearby the aerosol delivery device that defines a gesture, and without requiring any physical contact with the object, the photoelectric proximity sensor being configured to convert the motion to an electrical signal; and a control component configured to receive the electrical signal, recognize the gesture and an operation associated with the gesture based on the electrical signal, and control at least one functional element of the aerosol delivery device to perform the operation.
**Example Implementation 2:** The aerosol delivery device of any preceding example implementation, or any combination of any preceding example implementations, wherein the photoelectric sensor includes a light source and a photodetector configured to respectively emit light toward the object and receive a reflection of the light off the object from which the photoelectric sensor is configured to detect the motion of the object.
**Example Implementation 3:** The aerosol delivery device of any preceding example implementation, or any combination of any preceding example implementations, wherein the electrical signal conveys data about the motion of the object, and wherein the control component being configured to recognize the gesture includes being configured to recognize a pattern in the data, the pattern being associated with the gesture.
**Example Implementation 4:** The aerosol delivery device of any preceding example implementation, or any combination of any preceding example implementations, wherein the pattern is one of a plurality of patterns associated with a respective plurality of gestures associated with a respective plurality of operations.
**Example Implementation 5:** The aerosol delivery device of any preceding example implementation, or any combination of any preceding example implementations, wherein the photoelectric proximity sensor being configured to detect the motion of the object includes being configured to detect a swiping motion of a hand, finger or thumb nearby the aerosol delivery device without requiring any physical contact with the hand, finger or thumb.
**Example Implementation 6:** The aerosol delivery device of any preceding example implementation, or any combination of any preceding example implementations, wherein the operation comprises altering a power state or a locked state of the aerosol delivery device.
**Example Implementation 7:** The aerosol delivery device of any preceding example implementation, or any combination of any preceding example implementations, wherein the control component being configured to control the at least one functional element includes being configured to control an indicator to provide a user-perceptible feedback that indicates a level of the aerosol precursor composition retained in the reservoir.
**Example Implementation 8:** The aerosol delivery device of any preceding example implementation, or any combination of any preceding example implementations, wherein the aerosol delivery device further comprises a power source configured to supply power to the aerosol delivery device, wherein the control component being configured to control the at least one functional element includes being configured to control an indicator to provide a user-perceptible feedback that indicates a charge-level of the power source.
**Example Implementation 9:** The aerosol delivery device of any preceding example implementation, or any combination of any preceding example implementations, wherein the aerosol delivery device further comprises a temperature sensor configured to measure a temperature of the heating element, or measure a property of the temperature sensor from which the temperature of the heating element is determinable, wherein the control component being configured to control the at least one functional element includes being configured to control an indicator to provide a user-perceptible feedback that indicates the temperature of the heating element measured or determined from the property measured by the temperature sensor.
**Example Implementation 10:** The aerosol delivery device of any preceding example implementation, or any combination of any preceding example implementations, wherein the aerosol precursor composition comprises glycerin and nicotine.
**Example Implementation 11:** A control body coupled or coupleable with a cartridge to form an aerosol delivery device, the cartridge including a reservoir configured to retain an aerosol precursor composition, and a heating element controllable to activate and vaporize components of the aerosol precursor composition, the control body comprising a photoelectric proximity sensor configured to detect a motion of an object nearby the control body that defines a gesture, and without requiring any physical contact with the object, the photoelectric proximity sensor being configured to convert the motion to an electrical signal; and a control component configured to receive the electrical signal, recognize the gesture and an operation associated with the gesture based on the electrical signal, and control at least one functional element of the control body or the aerosol delivery device to perform the operation.
**Example Implementation 12:** The control body of any preceding example implementation, or any combination of any preceding example implementations, wherein the photoelectric sensor includes a light source and a photodetector configured to respectively emit light toward the object and receive a reflection of the light off the object from which the photoelectric sensor is configured to detect the motion of the object.
**Example Implementation 13:** The control body of any preceding example implementation, or any combination of any preceding example implementations, wherein the electrical signal conveys data about the motion of the object, and wherein the control component being configured to recognize the gesture includes being configured to recognize a pattern in the data, the pattern being associated with the gesture.
**Example Implementation 14:** The control body of any preceding example implementation, or any combination of any preceding example implementations, wherein the pattern is one of a plurality of patterns associated with a respective plurality of gestures associated with a respective plurality of operations.
**Example Implementation 15:** The control body of any preceding example implementation, or any combination of any preceding example implementations, wherein the photoelectric proximity sensor being configured to detect the motion of the object includes being configured to detect a swiping motion of a hand, finger or thumb nearby the control body without requiring any physical contact with the hand, finger or thumb.
**Example Implementation 16:** The control body of any preceding example implementation, or any combination of any preceding example implementations, wherein the operation comprises altering a power state or a locked state of the of the control body or the aerosol delivery device.
**Example Implementation 17:** The control body of any preceding example implementation, or any combination of any preceding example implementations, wherein the control component being configured to control the at least one functional element includes being configured to control an indicator to provide a user-perceptible feedback that indicates a level of the aerosol precursor composition retained in the reservoir when the control body is coupled with the cartridge.
**Example Implementation 18:** The control body of any preceding example implementation, or any combination of any preceding example implementations, wherein the control body further comprises a power source configured to supply power to the control body, wherein the control component being configured to control the at least one functional element includes being configured to control an indicator to provide a user-perceptible feedback that indicates a charge-level of the power source.
**Example Implementation 19:** The control body of any preceding example implementation, or any combination of any preceding example implementations, wherein the cartridge is further equipped with a temperature sensor configured to measure a temperature of the heating element, or measure a property of the temperature sensor from which the temperature of the heating element is determinable, and wherein the control component being configured to control the at least one functional element includes being configured to control an indicator to provide a user-perceptible feedback that indicates the temperature of the heating element measured or determined from the property measured by the temperature sensor.

These and other features, aspects, and advantages of the present disclosure will be apparent from a reading of the following detailed description together with the accompanying drawings, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable, unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying drawings which illustrate, by way of example, the principles of some described example implementations.

### BRIEF DESCRIPTION OF THE DRAWING(S)

Having thus described the disclosure in the foregoing general terms, reference will now be made to the accompanying drawings, which are not necessarily drawn to scale, and wherein:
FIG. 1 illustrates a side view of an aerosol delivery device including a cartridge coupled to a control body, according to an example implementation of the present disclosure; and
FIG. 2 is a partially cut-away view of the aerosol delivery device according to various example implementations.

### DETAILED DESCRIPTION

The present disclosure will now be described more fully hereinafter with reference to example implementations thereof. These example implementations are described so that this disclosure will be thorough and complete, and will fully convey the scope of the disclosure to those skilled in the art. Indeed, the disclosure may be embodied in many different forms and should not be construed as limited to the implementations set forth herein; rather, these implementations are provided so that this disclosure will satisfy applicable legal requirements. As used in the specification and the appended claims, the singular forms "a," "an," "the" and the like include plural referents unless the context clearly dictates otherwise. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As described hereinafter, example implementations of the present disclosure relate to aerosol delivery devices. Aerosol delivery devices according to the present disclosure use electrical energy to heat a material (preferably without combusting the material to any significant degree) to form an inhalable substance; and components of such systems have the form of articles most preferably are sufficiently compact to be considered hand-held devices. That is, use of components of preferred aerosol delivery devices does not result in the production of smoke in the sense that aerosol results principally from byproducts of combustion or pyrolysis of tobacco, but rather, use of those preferred systems results in the production of vapors resulting from volatilization or vaporization of certain components incorporated therein. In some example implementations, components of aerosol delivery devices may be characterized as electronic cigarettes, and those electronic cigarettes most preferably incorporate tobacco and/or components derived from tobacco, and hence deliver tobacco derived components in aerosol form.

Aerosol generating pieces of certain preferred aerosol delivery devices may provide many of the sensations (e.g., inhalation and exhalation rituals, types of tastes or flavors, organoleptic effects, physical feel, use rituals, visual cues such as those provided by visible aerosol, and the like) of smoking a cigarette, cigar or pipe that is employed by lighting and burning tobacco (and hence inhaling tobacco smoke), without any substantial degree of combustion of any component thereof. For example, the user of an aerosol generating piece of the present disclosure can hold and use that piece much like a smoker employs a traditional type of smoking article, draw on one end of that piece for inhalation of aerosol produced by that piece, take or draw puffs at selected intervals of time, and the like.

While the systems are generally described herein in terms of implementations associated with aerosol delivery devices such as so-called "e-cigarettes," it should be understood that the mechanisms, components, features, and methods may be embodied in many different forms and associated with a variety of articles. For example, the description provided herein may be employed in conjunction with implementations of traditional smoking articles (e.g., cigarettes, cigars, pipes, etc.), heat-not-burn cigarettes, and related packaging for any of the products disclosed herein. Accordingly, it should be understood that the description of the mechanisms, components, features, and methods disclosed herein are discussed in terms of implementations relating to aerosol delivery devices by way of example only, and may be embodied and used in various other products and methods.

Aerosol delivery devices of the present disclosure also can be characterized as being vapor-producing articles or medicament delivery articles. Thus, such articles or devices can be adapted so as to provide one or more substances (e.g., flavors and/or pharmaceutical active ingredients) in an inhalable form or state. For example, inhalable substances can be substantially in the form of a vapor (i.e., a substance that is in the gas phase at a temperature lower than its critical point). Alternatively, inhalable substances can be in the form of an aerosol (i.e., a suspension of fine solid particles or liquid droplets in a gas). For purposes of simplicity, the term "aerosol" as used herein is meant to include vapors, gases and aerosols of a form or type suitable for human inhalation, whether or not visible, and whether or not of a form that might be considered to be smoke-like.

In use, aerosol delivery devices of the present disclosure may be subjected to many of the physical actions employed by an individual in using a traditional type of smoking article (e.g., a cigarette, cigar or pipe that is employed by lighting and inhaling tobacco). For example, the user of an aerosol delivery device of the present disclosure can hold that article much like a traditional type of smoking article, draw on one end of that article for inhalation of aerosol produced by that article, take puffs at selected intervals of time, etc.

Aerosol delivery devices of the present disclosure generally include a number of components provided within an outer body or shell, which may be referred to as a housing. The overall design of the outer body or shell can vary, and the format or configuration of the outer body that can define the overall size and shape of the aerosol delivery device can vary. Typically, an elongated body resembling the shape of a cigarette or cigar can be a formed from a single, unitary housing or the elongated housing can be formed of two or more separable bodies. For example, an aerosol delivery device can comprise an elongated shell or body that can be substantially tubular in shape and, as such, resemble the shape of a conventional cigarette or cigar. In one example, all of the components of the aerosol delivery device are contained within one housing. Alternatively, an aerosol delivery device can comprise two or more housings that are joined and are separable. For example, an aerosol delivery device can possess at one end a control body comprising a housing containing one or more reusable components (e.g., an accumulator such as a rechargeable battery and/or supercapacitor, and various electronics for controlling the operation of that article), and at the other end and removably coupleable thereto, an outer body or shell containing a disposable portion (e.g., a disposable flavor-containing cartridge). More specific formats, configurations and arrangements of components within the single housing type of unit or within a multi-piece separable housing type of unit will be evident in light of the further disclosure provided herein. Additionally, various aerosol delivery device designs and component arrangements can be appreciated upon consideration of the commercially available electronic aerosol delivery devices.

Aerosol delivery devices of the present disclosure most preferably comprise some combination of a power source (i.e., an electrical power source), at least one control component (e.g., means for actuating, controlling, regulating and ceasing power for heat generation, such as by controlling electrical current flow the power source to other components of the article - e.g., a microprocessor, individually or as part of a microcontroller), a heater or heat generation member (e.g., an electrical resistance heating element or other component, which alone or in combination with one or more further elements may be commonly referred to as an "atomizer"), an aerosol precursor composition (e.g., commonly a liquid capable of yielding an aerosol upon application of sufficient heat, such as ingredients commonly referred to as "smoke juice," "e-liquid" and "e-juice"), and a mouthend region or tip for allowing draw upon the aerosol delivery device for aerosol inhalation (e.g., a defined airflow path through the article such that aerosol generated can be withdrawn therefrom upon draw).

Alignment of the components within the aerosol delivery device of the present disclosure can vary. In specific implementations, the aerosol precursor composition can be located near an end of the aerosol delivery device which may be configured to be positioned proximal to the mouth of a user so as to maximize aerosol delivery to the user. Other configurations, however, are not excluded. Generally, the heating element can be positioned sufficiently near the aerosol precursor composition so that heat from the heating element can volatilize the aerosol precursor (as well as one or more flavorants, medicaments, or the like that may likewise be provided for delivery to a user) and form an aerosol for delivery to the user. When the heating element heats the aerosol precursor composition, an aerosol is formed, released, or generated in a physical form suitable for inhalation by a consumer. It should be noted that the foregoing terms are meant to be interchangeable such that reference to release, releasing, releases, or released includes form or generate, forming or generating, forms or generates, and formed or generated. Specifically, an inhalable substance is released in the form of a vapor or aerosol or mixture thereof, wherein such terms are also interchangeably used herein except where otherwise specified.

As noted above, the aerosol delivery device may incorporate a battery or other electrical power source to provide current flow sufficient to provide various functionalities to the aerosol delivery device, such as powering of a heater, powering of control systems, powering of indicators, and the like. The power source can take on various implementations. Preferably, the power source is able to deliver sufficient power to rapidly heat the heating element to provide for aerosol formation and power the aerosol delivery device through use for a desired duration of time. The power source preferably is sized to fit conveniently within the aerosol delivery device so that the aerosol delivery device can be easily handled. Additionally, a preferred power source is of a sufficiently light weight to not detract from a desirable smoking experience.

More specific formats, configurations and arrangements of components within the aerosol delivery devices of the present disclosure will be evident in light of the further disclosure provided hereinafter. Additionally, the selection and arrangement of various aerosol delivery device components can be appreciated upon consideration of the commercially available electronic aerosol delivery devices. Further, the arrangement of the components within the aerosol delivery device can also be appreciated upon consideration of the commercially-available electronic aerosol delivery devices. Examples of commercially available products, for which the components thereof, methods of operation thereof, materials included therein, and/or other attributes thereof may be included in the devices of the present disclosure have been marketed as ACCORD® by Philip Morris Incorporated; ALPHA™, JOYE 510™ and M4™ by InnoVapor LLC; CIRRUS™ and FLING™ by White Cloud Cigarettes; BLU™ by Lorillard Technologies, Inc.; COHITA™, COLIBRI™, ELITE CLASSIC™, MAGNUM™, PHANTOM™ and SENSE™ by Epuffer® International Inc.; DUOPRO™, STORM™ and VAPORKING® by Electronic Cigarettes, Inc.; EGAR™ by Egar Australia; eGo-C™ and eGo-T™ by Joyetech; ELUSION™ by Elusion UK Ltd; EONSMOKE® by Eonsmoke LLC; FIN™ by FIN Branding Group, LLC; SMOKE® by Green Smoke Inc. USA; GREENARETTE™ by Greenarette LLC; HALLIGAN™, HENDU™, JET™, MAXXQ™, PINK™ and PITBULL™ by Smoke Stik®; HEATBAR™ by Philip Morris International, Inc.; HYDRO IMPERIAL™ and LXE™ from Crown7; LOGIC™ and THE CUBAN™ by LOGIC Technology; LUCI® by Luciano Smokes Inc.; METRO® by Nicotek, LLC; NJOY® and ONFJOY™ by Sottera, Inc.; NO. 7™ by SS Choice LLC; PREMIUM ELECTRONIC CIGARETTE™ by PremiumEstore LLC; RAPP E-MYSTICK™ by Ruyan America, Inc.; RED DRAGON™ by Red Dragon Products, LLC; RUYAN® by Ruyan Group (Holdings) Ltd.; SF® by Smoker Friendly International, LLC; GREEN SMART SMOKER® by The Smart Smoking Electronic Cigarette Company Ltd.; SMOKE ASSIST® by Coastline Products LLC; SMOKING EVERYWHERE® by Smoking Everywhere, Inc.; V2CIGS™ by VMR Products LLC; VAPOR NINE™ by VaporNine LLC; VAPOR4LIFE® by Vapor 4 Life, Inc.; VEPPO™ by E-CigaretteDirect, LLC; AVIGO, VUSE, VUSE CONNECT, VUSE FOB, VUSE HYBRID, ALTO, ALTO+, MODO, CIRO, FOX + FOG, AND SOLO+ by R. J. Reynolds Vapor Company; MISTIC MENTHOL by Mistic Ecigs; and VYPE by CN Creative Ltd. Yet other electrically powered aerosol delivery devices, and in particular those devices that have been characterized as so-called electronic cigarettes, have been marketed under the tradenames COOLER VISIONS™; DIRECT E-CIG™; DRAGONFLY™; EMIST™; EVERSMOKE™; GAMUCCI®; HYBRID FLAME™; KNIGHT STICKS™; ROYAL BLUES™; SMOKETIP®; SOUTH BEACH SMOKE™.

Additional manufacturers, designers, and/or assignees of components and related technologies that may be employed in the aerosol delivery device of the present disclosure include Shenzhen Jieshibo Technology of Shenzhen, China; Shenzhen First Union Technology of Shenzhen City, China; Safe Cig of Los Angeles, CA; Janty Asia Company of the Philippines; Joyetech Changzhou Electronics of Shenzhen, China; SIS Resources; B2B International Holdings of Dover, DE; Evolv LLC of OH; Montrade of Bologna, Italy; Shenzhen Bauway Technology of Shenzhen, China; Global Vapor Trademarks Inc. of Pompano Beach, FL; Vapor Corp. of Fort Lauderdale, FL; Nemtra GMBH of Raschau-Markersbach, Germany, Perrigo L. Co. of Allegan, MI; Needs Co., Ltd.; Smokefree Innotec of Las Vegas, NV; McNeil AB of Helsingborg, Sweden; Chong Corp; Alexza Pharmaceuticals of Mountain View, CA; BLEC, LLC of Charlotte, NC; Gaitrend Sarl of Rohrbach-lès-Bitche, France; FeelLife Bioscience International of Shenzhen, China; Vishay Electronic BMGH of Selb, Germany; Shenzhen Smaco Technology Ltd. of Shenzhen, China; Vapor Systems International of Boca Raton, FL; Exonoid Medical Devices of Israel; Shenzhen Nowotech Electronic of Shenzhen, China; Minilogic Device Corporation of Hong Kong, China; Shenzhen Kontle Electronics of Shenzhen, China, and Fuma International, LLC of Medina, OH, 21st Century Smoke of Beloit, WI, and Kimree Holdings (HK) Co. Limited of Hong Kong, China.

In various examples, an aerosol delivery device can comprise a reservoir configured to retain the aerosol precursor composition. The reservoir particularly can be formed of a porous material (e.g., a fibrous material) and thus may be referred to as a porous substrate (e.g., a fibrous substrate).

A fibrous substrate useful as a reservoir in an aerosol delivery device can be a woven or nonwoven material formed of a plurality of fibers or filaments and can be formed of one or both of natural fibers and synthetic fibers. For example, a fibrous substrate may comprise a fiberglass material. In particular examples, a cellulose acetate material can be used. In other example implementations, a carbon material can be used. A reservoir may be substantially in the form of a container and may include a fibrous material included therein.

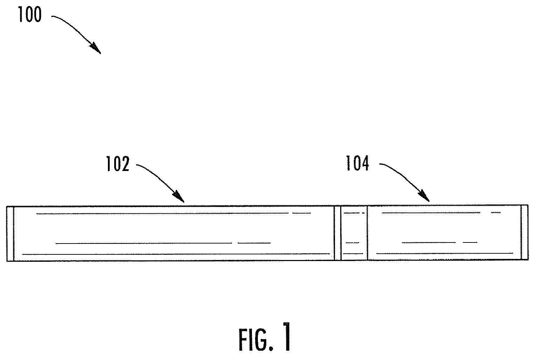

FIG. 1 illustrates a side view of an aerosol delivery device 100 including a control body 102 and a cartridge 104, according to various example implementations of the present disclosure. In particular, FIG. 1 illustrates the control body and the cartridge coupled to one another. The control body and the cartridge may be detachably aligned in a functioning relationship. Various mechanisms may connect the cartridge to the control body to result in a threaded engagement, a press-fit engagement, an interference fit, a magnetic engagement or the like. The aerosol delivery device may be substantially rod-like, substantially tubular shaped, or substantially cylindrically shaped in some example implementations when the cartridge and the control body are in an assembled configuration. The aerosol delivery device may also be substantially rectangular or rhomboidal in cross-section, which may lend itself to greater compatibility with a substantially flat or thin-film power source, such as a power source including a flat battery. The cartridge and control body may include separate, respective housings or outer bodies, which may be formed of any of a number of different materials. The housing may be formed of any suitable, structurally-sound material. In some examples, the housing may be formed of a metal or alloy, such as stainless steel, aluminum or the like. Other suitable materials include various plastics (e.g., polycarbonate), metal-plating over plastic, ceramics and the like.

In some example implementations, one or both of the control body **102** or the cartridge **104** of the aerosol delivery device **100** may be referred to as being disposable or as being reusable. For example, the control body may have a replaceable battery or a rechargeable battery and thus may be combined with any type of recharging technology, including connection to a typical wall outlet, connection to a car charger (i.e., a cigarette lighter receptacle), connection to a computer, such as through a universal serial bus (USB) cable or connector, connection to a photovoltaic cell (sometimes referred to as a solar cell) or solar panel of solar cells, or connection to a RF-to-DC converter. Further, in some example implementations, the cartridge may comprise a single-use cartridge, as disclosed in U.S. Pat. No. 8,910,639 to Chang et al., which is incorporated herein by reference.

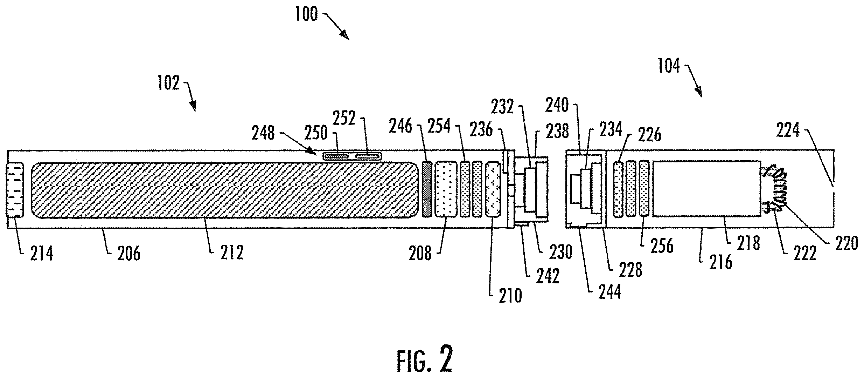

FIG. 2 more particularly illustrates the aerosol delivery device **100**, in accordance with some example implementations. As seen in the cut-away view illustrated therein, again, the aerosol delivery device can comprise a control body **102** and a cartridge **104** each of which include a number of respective components. The components illustrated in FIG. 2 are representative of the components that may be present in a control body and cartridge and are not intended to limit the scope of components that are encompassed by the present disclosure. As shown, for example, the control body can be formed of a control body shell **206** that can include a control component **208** (e.g., a microprocessor, individually or as part of a microcontroller), a flow sensor **210**, a power source **212** and one or more light-emitting diodes (LEDs) **214**, and such components can be variably aligned. The power source may include, for example, a battery (single-use or rechargeable), lithium-ion battery (LiB), solid-state battery (SSB), thin-film SSB, supercapacitor or the like, or some combination thereof. Some examples of a suitable power source are provided in U.S. Pat. App. Ser. No. 14/918,926 to Sur et al., filed October 21, 2015, which is incorporated herein by reference. The LED may be one example of a suitable visual indicator with which the aerosol delivery device may be equipped. Other indicators such as audio indicators (e.g., speakers), haptic indicators (e.g., vibration motors) or the like can be included in addition to or as an alternative to visual indicators such as the LED.

The cartridge **104** can be formed of a cartridge shell **216** enclosing a reservoir **218** configured to retain the aerosol precursor composition, and including a heater **222** (sometimes referred to as a heating element). In various configurations, this structure may be referred to as a tank; and accordingly, the terms "cartridge," "tank" and the like may be used interchangeably to refer to a shell or other housing enclosing a reservoir for aerosol precursor composition, and including a heater.

As shown, in some examples, the reservoir **218** may be in fluid communication with a liquid transport element **220** adapted to wick or otherwise transport an aerosol precursor composition stored in the reservoir housing to the heater **222.** In some examples, a valve may be positioned between the reservoir and heater, and configured to control an amount of aerosol precursor composition passed or delivered from the reservoir to the heater.

Various examples of materials configured to produce heat when electrical current is applied therethrough may be employed to form the heater **222.** The heater in these examples may be a resistive heating element such as a wire coil, micro heater or the like. Example materials from which the heating element may be formed include Kanthal (FeCrAl), Nichrome, stainless steel, Molybdenum disilicide (MoSi₂), molybdenum silicide (MoSi), Molybdenum disilicide doped with Aluminum (Mo(Si,Al)₂), graphite and graphite-based materials (e.g., carbon-based foams and yarns) and ceramics (e.g., positive or negative temperature coefficient ceramics). Example implementations of heaters or heating members useful in aerosol delivery devices according to the present disclosure are further described below, and can be incorporated into devices such as illustrated in FIG. 2 as described herein.

An opening **224** may be present in the cartridge shell **216** (e.g., at the mouthend) to allow for egress of formed aerosol from the cartridge **104.**

The cartridge **104** also may include one or more electronic components **226**, which may include an integrated circuit, a memory component, a sensor, or the like. For example, the cartridge may include a temperature sensor configured to measure a temperature of the heater **222**, or measure a property of the temperature sensor from which the temperature of the heater is determinable. Examples of suitable temperature sensors are thermistors, thermocouples, resistance temperature detectors (RTDs), silicon bandgap temperature sensors and the like. More particular examples are described in U.S. Pat. App. Ser. No. 15/349,619 to Davis et al., filed November 11, 2016, the disclosure of which is incorporated herein by reference. The electronic components may be adapted to communicate with the control component **208** and/or with an external device by wired or wireless means. The electronic components may be positioned anywhere within the cartridge or a base **228** thereof.

Although the control component **208** and the flow sensor **210** are illustrated separately, it is understood that various electronic components including the control component and the flow sensor may be combined on an electronic printed circuit board (PCB) that supports and electrically connects the electronic components. Further, the PCB may be positioned horizontally relative the illustration of FIG. 1 in that the PCB can be lengthwise parallel to the central axis of the control body. In some examples, the air flow sensor may comprise its own PCB or other base element to which it can be attached. In some examples, a flexible PCB may be utilized. A flexible PCB may be configured into a variety of shapes, include substantially tubular shapes. In some examples, a flexible PCB may be combined with, layered onto, or form part or all of a heater substrate.

The control body **102** and the cartridge **104** may include components adapted to facilitate a fluid engagement therebetween. As illustrated in FIG. 2, the control body can include a coupler **230** having a cavity **232** therein. The base **228** of the cartridge can be adapted to engage the coupler and can include a projection **234** adapted to fit within the cavity. Such engagement can facilitate a stable connection between the control body and the cartridge as well as establish an electrical connection between the power source **212** and control component **208** in the control body and the heater **222** in the cartridge. Further, the control body shell **206** can include an air intake **236**, which may be a notch in the shell where it connects to the coupler that allows for passage of ambient air around the coupler and into the shell where it then passes through the cavity **232** of the coupler and into the cartridge through the projection **234.**

A coupler and a base useful according to the present disclosure are described in U.S. Pat. App. Pub. No. 2014/0261495 to Novak et al., which is incorporated herein by reference. For example, the coupler **230** as seen in FIG. 2 may define an outer periphery **238** configured to mate with an inner periphery **240** of the base **228.** In one example the inner periphery of the base may define a radius that is substantially equal to, or slightly greater than, a radius of the outer periphery of the coupler. Further, the coupler may define one or more protrusions **242** at the outer periphery configured to engage one or more recesses **244** defined at the inner periphery of the base. However, various other examples of structures, shapes and components may be employed to couple the base to the coupler. In some examples the connection between the base of the cartridge **104** and the coupler of the control body **102** may be substantially permanent, whereas in other examples the connection therebetween may be releasable such that, for example, the control body may be reused with one or more additional cartridges that may be disposable and/or refillable.

The aerosol delivery device **100** may be substantially rod-like or substantially tubular shaped or substantially cylindrically shaped in some examples. In other examples, further shapes and dimensions are encompassed - e.g., a rectangular or triangular cross-section, multifaceted shapes, or the like.

The reservoir **218** illustrated in FIG. 2 can be a container or can be a fibrous reservoir, as presently described. For example, the reservoir can comprise one or more layers of nonwoven fibers substantially formed into the shape of a tube encircling the interior of the cartridge shell **216**, in this example. An aerosol precursor composition can be retained in the reservoir. Liquid components, for example, can be sorptively retained by the reservoir. The reservoir can be in fluid connection with the liquid transport element **220.** The liquid transport element can transport the aerosol precursor composition stored in the reservoir via capillary action to the heater **222** that is in the form of a metal wire coil in this example. As such, the heater is in a heating arrangement with the liquid transport element. Example implementations of reservoirs and transport elements useful in aerosol delivery devices according to the present disclosure are further described below, and such reservoirs and/or transport elements can be incorporated into devices such as illustrated in FIG. 2 as described herein. In particular, specific combinations of heating members and transport elements as further described below may be incorporated into devices such as illustrated in FIG. 2 as described herein.

In use, when a user draws on the aerosol delivery device **100**, airflow is detected by the flow sensor **210**, and the heater **222** is activated to vaporize components of the aerosol precursor composition. Drawing upon the mouthend of the aerosol delivery device causes ambient air to enter the air intake **236** and pass through the cavity **232** in the coupler **230** and the central opening in the projection **234** of the base **228.** In the cartridge **104**, the drawn air combines with the formed vapor to form an aerosol. The aerosol is whisked, aspirated or otherwise drawn away from the heater and out the opening **224** in the mouthend of the aerosol delivery device.

In some examples, the aerosol delivery device **100** may include a number of additional software-controlled functions. For example, the aerosol delivery device may include a power-source protection circuit configured to detect power-source input, loads on the power-source terminals, and charging input. The power-source protection circuit may include short-circuit protection, under-voltage lock out and/or over-voltage charge protection. The aerosol delivery device may also include components for ambient temperature measurement, and its control component **208** may be configured to control at least one functional element to inhibit power-source charging - particularly of any battery - if the ambient temperature is below a certain temperature (e.g., 0 °C) or above a certain temperature (e.g., 45 °C) prior to start of charging or during charging.

Power delivery from the power source **212** may vary over the course of each puff on the device **100** according to a power control mechanism. The device may include a "long puff" safety timer such that in the event that a user or component failure (e.g., flow sensor **210**) causes the device to attempt to puff continuously, the control component **208** may control at least one functional element to terminate the puff automatically after some period of time (e.g., four seconds). Further, the time between puffs on the device may be restricted to less than a period of time (e.g., 100 seconds). A watchdog safety timer may automatically reset the aerosol delivery device if its control component or software running on it becomes unstable and does not service the timer within an appropriate time interval (e.g., eight seconds). Further safety protection may be provided in the event of a defective or otherwise failed flow sensor **210**, such as by permanently disabling the aerosol delivery device in order to prevent inadvertent heating. A puffing limit switch may deactivate the device in the event of a pressure sensor fail causing the device to continuously activate without stopping after the four second maximum puff time.

The aerosol delivery device **100** may include a puff tracking algorithm configured for heater lockout once a defined number of puffs has been achieved for an attached cartridge (based on the number of available puffs calculated in light of the e-liquid charge in the cartridge). The aerosol delivery device may include a sleep, standby or low-power mode function whereby power delivery may be automatically cut off after a defined period of non-use. Further safety protection may be provided in that all charge/discharge cycles of the power source **212** may be monitored by the control component **208** over its lifetime. After the power source has attained the equivalent of a predetermined number (e.g., 200) of full discharge and full recharge cycles, it may be declared depleted, and the control component may control at least one functional element to prevent further charging of the power source.

The various components of an aerosol delivery device according to the present disclosure can be chosen from components described in the art and commercially available. Examples of batteries that can be used according to the disclosure are described in U.S. Pat. App. Pub. No. 2010/0028766 to Peckerar et al., which is incorporated herein by reference.

The aerosol delivery device **100** can incorporate the sensor **210** or another sensor or detector for control of supply of electric power to the heater **222** when aerosol generation is desired (e.g., upon draw during use). As such, for example, there is provided a manner or method of turning off power to the heater when the aerosol delivery device is not be drawn upon during use, and for turning on power to actuate or trigger the generation of heat by the heater during draw. Additional representative types of sensing or detection mechanisms, structure and configuration thereof, components thereof, and general methods of operation thereof, are described in U.S. Pat. No. 5,261,424 to Sprinkel, Jr., U.S. Pat. No. 5,372,148 to McCafferty et al., and PCT Pat. App. Pub. No. WO 2010/003480 to Flick, all of which are incorporated herein by reference.

The aerosol delivery device **100** most preferably incorporates the control component **208** or another control mechanism for controlling the amount of electric power to the heater **222** during draw. Representative types of electronic components, structure and configuration thereof, features thereof, and general methods of operation thereof, are described in U.S. Pat. No. 4,735,217 to Gerth et al., U.S. Pat. No. 4,947,874 to Brooks et al., U.S. Pat. No. 5,372,148 to McCafferty et al., U.S. Pat. No. 6,040,560 to Fleischhauer et al., U.S. Pat. No. 7,040,314 to Nguyen et al., U.S. Pat. No. 8,205,622 to Pan, U.S. Pat. App. Pub. No. 2009/0230117 to Fernando et al., U.S. Pat. App. Pub. No. 2014/0060554 to Collet et al., U.S. Pat. App. Pub. No. 2014/0270727 to Ampolini et al., and U.S. Pat. App. Pub. No. 2015/0257445 to Henry et al., all of which are incorporated herein by reference.

Representative types of substrates, reservoirs or other components for supporting the aerosol precursor are described in U.S. Pat. No. 8,528,569 to Newton, U.S. Pat. App. Pub. No. 2014/0261487 to Chapman et al., U.S. Pat. App. Pub. No. 2015/0059780 to Davis et al., and U.S. Pat. App. Pub. No. 2015/0216232 to Bless et al., all of which are incorporated herein by reference. Additionally, various wicking materials, and the configuration and operation of those wicking materials within certain types of electronic cigarettes, are set forth in U.S. Pat. App. Pub. No. 2014/0209105 to Sears et al., which is incorporated herein by reference.

The aerosol precursor composition, also referred to as a vapor precursor composition, may comprise a variety of components including, by way of example, a polyhydric alcohol (e.g., glycerin, propylene glycol or a mixture thereof), nicotine, tobacco, tobacco extract and/or flavorants. Representative types of aerosol precursor components and formulations also are set forth and characterized in U.S. Pat. No. 7,217,320 to Robinson et al. and U.S. Pat. Pub. Nos. 2013/0008457 to Zheng et al.; 2013/0213417 to Chong et al.; 2014/0060554 to Collett et al.; 2015/0020823 to Lipowicz et al.; and 2015/0020830 to Koller, as well as WO 2014/182736 to Bowen et al., and U.S. Pat. App. Ser. No. 15/222,615 to Watson et al., filed July 28, 2016, the disclosures of which are incorporated herein by reference. Other aerosol precursors that may be employed include the aerosol precursors that have been incorporated in the VUSE® product by R. J. Reynolds Vapor Company, the BLU™ product by Imperial Tobacco Group PLC, the MISTIC MENTHOL product by Mistic Ecigs, and the VYPE product by CN Creative Ltd. Also desirable are the so-called "smoke juices" for electronic cigarettes that have been available from Johnson Creek Enterprises LLC.

Implementations of effervescent materials can be used with the aerosol precursor, and are described, by way of example, in U.S. Pat. App. Pub. No. 2012/0055494 to Hunt et al., which is incorporated herein by reference. Further, the use of effervescent materials is described, for example, in U.S. Pat. No. 4,639,368 to Niazi et al.; U.S. Pat. No. 5,178,878 to Wehling et al.; U.S. Pat. No. 5,223,264 to Wehling et al.; U.S. Pat. No. 6,974,590 to Pather et al.; U.S. Pat. No. 7,381,667 to Bergquist et al.; U.S. Pat. No. 8,424,541 to Crawford et al; and U.S. Pat. No. 8,627,828 to Strickland et al.; as well as US Pat. Pub. Nos. 2010/0018539 to Brinkley et al. and 2010/0170522 to Sun et al.; and PCT WO 97/06786 to Johnson et al., all of which are incorporated by reference herein. Additional description with respect to implementations of aerosol precursor compositions, including description of tobacco or components derived from tobacco included therein, is provided in U.S. Pat. Appl. Ser. Nos. 15/216,582 and 15/216,590, each filed July 21, 2016 and each to Davis et al., which are incorporated herein by reference.

Additional representative types of components that yield visual cues or indicators may be employed in the aerosol delivery device **100**, such as visual indicators and related components, audio indicators, haptic indicators and the like. Examples of suitable LED components, and the configurations and uses thereof, are described in U.S. Pat. No. 5,154,192 to Sprinkel et al., U.S. Pat. No. 8,499,766 to Newton, U.S. Pat. No. 8,539,959 to Scatterday, and U.S. Pat. App. Pub. No. 2015/0216233 to Sears et al., all of which are incorporated herein by reference.

Yet other features, controls or components that can be incorporated into aerosol delivery devices of the present disclosure are described in U.S. Pat. No. 5,967,148 to Harris et al., U.S. Pat. No. 5,934,289 to Watkins et al., U.S. Pat. No. 5,954,979 to Counts et al., U.S. Pat. No. 6,040,560 to Fleischhauer et al., U.S. Pat. No. 8,365,742 to Hon, U.S. Pat. No. 8,402,976 to Fernando et al., U.S. Pat. App. Pub. No. 2005/0016550 to Katase, U.S. Pat. App. Pub. No. 2010/0163063 to Fernando et al., U.S. Pat. App. Pub. No. 2013/0192623 to Tucker et al., U.S. Pat. App. Pub. No. 2013/0298905 to Leven et al., U.S. Pat. App. Pub. No. 2013/0180553 to Kim et al., U.S. Pat. App. Pub. No. 2014/0000638 to Sebastian et al., U.S. Pat. App. Pub. No. 2014/0261495 to Novak et al., and U.S. Pat. App. Pub. No. 2014/0261408 to DePiano et al., all of which are incorporated herein by reference.

As indicated above, the control component **208** includes a number of electronic components, and in some examples may be formed of a PCB. The electronic components may include a microprocessor or processor core, and a memory. In some examples, the control component may include a microcontroller with integrated processor core and memory, and may further include one or more integrated input/output peripherals. In some examples, the control component may be coupled to a communication interface **246** to enable wireless communication with one or more networks, computing devices or other appropriately-enabled devices. Examples of suitable communication interfaces are disclosed in U.S. Pat. App. Ser. No. 14/638,562 to Marion et al., filed March 4, 2015, the content of which is incorporated herein by reference. Another example of a suitable communication interface is the CC3200 single chip wireless microcontroller unit (MCU) from Texas Instruments. And examples of suitable manners according to which the aerosol delivery device may be configured to wirelessly communicate are disclosed in U.S. Pat. App. Pub. No. 2016/0007651 to Ampolini et al., and U.S. Pat. App. Pub. No. 2016/0219933 to Henry, Jr. et al., each of which is incorporated herein by reference.

In accordance with some example implementations, the cartridge **104** includes a photoelectric proximity sensor **248** to enable gesture-based control of the aerosol delivery device **100.** More particularly, the photoelectric proximity sensor is configured to detect a motion of an object such as a user's hand, finger or thumb, which defines a gesture. As a proximity sensor, the photoelectric proximity sensor is able to detect motion of the object nearby the aerosol delivery device without requiring any physical contact with the object. In some examples, the photoelectric sensor includes a light source **250** and a photodetector **252** configured to respectively emit light (e.g., visible light, infrared light) toward the object and receive a reflection of the light off the object from which the photoelectric sensor is configured to detect the defined motion of the object.

In some examples, the light source **250** is an LED configured to emit light out from the aerosol delivery device **100** toward the nearby object, and the photodetector **252** is configured to measure a reflection of the light off the nearby object. Examples of suitable photodetectors include photodiodes, photoresistors, phototransistors and the like. One more particular example of a suitable photoelectric proximity sensor **248** includes an infrared LED (light source) coupled to a photodiode embodied in the ADUX1020 photometric sensor from Analog Devices.

Regardless of the exact manner in which the photoelectric proximity sensor **248** detects the motion of the object, the photoelectric proximity sensor is further configured to convert the defined motion to an electrical signal, which may then be used to recognize the gesture and an associated operation to perform in response thereto. In some examples, a control component may be configured to receive the electrical signal, recognize the gesture and an operation associated with the gesture based on the electrical signal, and control at least one functional element of the aerosol delivery device to perform the operation. As described in the examples below, this control component may be the control component **208** of the control body **102.** It should be understood, however, that the control component may be instead another control component of the control body or even the cartridge **104.**

In some examples, the electrical signal from the photoelectric proximity sensor **248** conveys data about the defined motion of the object, and the control component **208** is configured to recognize a pattern in the data, with the pattern being associated with the gesture. In some further examples, the pattern is one of a plurality of patterns associated with a respective plurality of gestures associated with a respective plurality of operations.

In some examples in which the object is a user's hand, finger or thumb, the photoelectric proximity sensor **248** is configured to detect a defined swiping motion of a hand, finger or thumb nearby the aerosol delivery device without requiring any physical contact with the hand, finger or thumb. The swiping motion may be detected in a plane some distance from the aerosol delivery device **100**, and include motions in relative directions that define respective gestures associated with respective operations. For example, a left swiping motion may define a first gesture associated with a first operation, and a right swiping motion may define a second gesture associated with a second operation. Similarly, for example, a forward swiping motion may define a third gesture associated with a third operation, and a backward swiping motion may define a fourth gesture associated with a fourth operation. Even further, the swiping motion may be detected in a perpendicular plane. For example, an up swiping motion may define a fifth gesture associated with a fifth operation, and a down swiping motion may define a sixth gesture associated with a sixth operation.

Any number of operations may be associated with a gesture and performed in response to recognition of the gesture. In some examples, a gesture is associated with the operation of altering a power state or a locked state of the aerosol delivery device **100.** This may include, for example, turning the aerosol delivery device on or off, or unlocking (enabling) or locking (disabling) operation of the aerosol delivery device. In a more particular example, backward and forward swiping motions may define gestures associated with respectively turning the aerosol delivery device on and off. Similarly, for example, backward and forward swiping motions may define gestures associated with respectively unlocking and locking operation of the aerosol delivery device.

In some examples, a motion (e.g., left swiping motion) defines a gesture associated with the operation of indicating a level of aerosol precursor composition in the reservoir **218.** In these examples, control of the functional element(s) to perform the operation includes control of an indicator **254** to provide a user-perceptible feedback (e.g., visual, audible, haptic feedback) that indicates the level of the aerosol precursor composition retained in the reservoir. The feedback may include, for example, a visual, audible and/or haptic notification regarding the level of aerosol precursor composition. The notification may indicate an absolute or relative (e.g., percentage) level of aerosol precursor composition, or more simply, indicate that the level of aerosol precursor composition is above, at or below a threshold level.

In some examples, a motion (e.g., right swiping motion) defines a gesture associated with the operation of indicating a charge-level of the power source 212. In these examples, control of the functional element(s) to perform the operation includes control of the indicator 254 or another indicator 256 on the control body or (as shown) the cartridge to provide a user-perceptible feedback (e.g., visual, audible, haptic feedback) that indicates the charge-level of the power source. Similar to before, the feedback may include, for example, a visual, audible and/or haptic notification regarding the charge-level of the power source. The notification may indicate an absolute or relative (e.g., percentage) charge-level, or more simply, indicate that the charge-level is above, at or below a threshold charge-level.

In some examples in which the aerosol delivery device includes a temperature sensor (e.g., electronic component **226**), a motion (e.g., down swiping motion) defines a gesture associated with the operation of indicating the temperature of the heater **222** measured or determined from the property measured by the temperature sensor. In these examples, control of the functional element(s) to perform the operation includes control of the indicator **254** or another indicator **256** on the control body or (as shown) the cartridge to provide a user-perceptible feedback (e.g., visual, audible, haptic feedback) that indicates the temperature of the heater. Again, the feedback may include, for example, a visual, audible and/or haptic notification regarding the temperature of the heater. The notification may indicate an absolute or relative (e.g., percentage) temperature, or more simply, indicate that the charge-level is above, at or below a threshold temperature.

The foregoing description of use of the article(s) can be applied to the various example implementations described herein through minor modifications, which can be apparent to the person of skill in the art in light of the further disclosure provided herein. The above description of use, however, is not intended to limit the use of the article but is provided to comply with all necessary requirements of disclosure of the present disclosure. Any of the elements shown in the article(s) illustrated in FIGS. 1 and 2 or as otherwise described above may be included in an aerosol delivery device according to the present disclosure.

Many modifications and other implementations of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific implementations disclosed, and that modifications and other implementations are intended to be included within the scope of the appended claims. Moreover, although the foregoing descriptions and the associated drawings describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An aerosol delivery device comprising:
an atomizer controllable to generate an aerosol from an aerosol precursor composition;
a photoelectric proximity sensor configured to detect a motion of an object nearby the aerosol delivery device that defines a gesture, and without requiring any physical contact with the object, the photoelectric sensor including a light source and a photodetector configured to respectively emit light toward the object and receive a reflection of the light off the object from which the photoelectric sensor is configured to detect the motion of the object, the photoelectric proximity sensor being configured to convert the motion to an electrical signal; and
a control component configured to receive the electrical signal, recognize the gesture and an operation associated with the gesture based on the electrical signal, and control at least one functional element of the aerosol delivery device to perform the operation.

2. The aerosol delivery device of Claim 1, wherein the electrical signal conveys data about the motion of the object, and
wherein the control component being configured to recognize the gesture includes being configured to recognize a pattern in the data, the pattern being associated with the gesture, and, in particular,
wherein the pattern is one of a plurality of patterns associated with a respective plurality of gestures associated with a respective plurality of operations.

3. The aerosol delivery device of any one of Claims 1 to 2, wherein the photoelectric proximity sensor being configured to detect the motion of the object includes being configured to detect a defined swiping motion of a hand, finger or thumb nearby the aerosol delivery device without requiring any physical contact with the hand, finger or thumb.

4. The aerosol delivery device of any one of Claims 1 to 3, wherein the operation comprises altering a power state or a locked state of the aerosol delivery device.

5. The aerosol delivery device of any one of Claims 1 to 4, wherein the control component being configured to control the at least one functional element includes being configured to control an indicator to provide a user-perceptible feedback that indicates a level of the aerosol precursor composition.

6. The aerosol delivery device of any one of Claims 1 to 5 further comprising a power source configured to supply power to the aerosol delivery device,
wherein the control component being configured to control the at least one functional element includes being configured to control an indicator to provide a user-perceptible feedback that indicates a charge-level of the power source.

7. The aerosol delivery device of any one of Claims 1 to 6 further comprising a temperature sensor configured to measure a temperature of the atomizer, or measure a property of the temperature sensor from which the temperature of the atomizer is determinable,
wherein the control component being configured to control the at least one functional element includes being configured to control an indicator to provide a user-perceptible feedback that indicates the temperature of the atomizer measured or determined from the property measured by the temperature sensor.

8. The aerosol delivery device of any one of Claims 1 to 7, wherein the aerosol precursor composition comprises glycerin and nicotine.

9. A control body for an aerosol delivery device, the control body comprising:
a photoelectric proximity sensor configured to detect a motion of an object nearby the control body that defines a gesture, and without requiring any physical contact with the object, the photoelectric sensor including a light source and a photodetector configured to respectively emit light toward the object and receive a reflection of the light off the object from which the photoelectric sensor is configured to detect the motion of the object, the photoelectric proximity sensor being configured to convert the motion to an electrical signal; and
a control component configured to control an atomizer to generate an aerosol from an aerosol precursor composition, the control component further configured to receive the electrical signal, recognize the gesture and an operation associated with the gesture based on the electrical signal, and control at least one functional element of the control body or the aerosol delivery device to perform the operation.

10. The control body of Claim 9, wherein the electrical signal conveys data about the motion of the object, and
wherein the control component being configured to recognize the gesture includes being configured to recognize a pattern in the data, the pattern being associated with the gesture, and, in particular,
wherein the pattern is one of a plurality of patterns associated with a respective plurality of gestures associated with a respective plurality of operations.

11. The control body of any one of Claims 9 to 10, wherein the photoelectric proximity sensor being configured to detect the motion of the object includes being configured to detect a defined swiping motion of a hand, finger or thumb nearby the control body without requiring any physical contact with the hand, finger or thumb.

12. The control body of any one of Claims 9 to 11, wherein the operation comprises altering a power state or a locked state of the of the control body or the aerosol delivery device.

13. The control body of any one of Claims 9 to 12, wherein the control component being configured to control the at least one functional element includes being configured to control an indicator to provide a user-perceptible feedback that indicates a level of the aerosol precursor composition.

14. The control body of any one of Claims 9 to 13 further comprising a power source configured to supply power to the control body,
wherein the control component being configured to control the at least one functional element includes being configured to control an indicator to provide a user-perceptible feedback that indicates a charge-level of the power source.

15. The control body of any one of Claims 9 to 14, wherein the control body is coupled or coupleable with a cartridge to form the aerosol delivery device, the cartridge including the atomizer and further equipped with a temperature sensor configured to measure a temperature of the atomizer, or measure a property of the temperature sensor from which the temperature of the atomizer is determinable, and
wherein the control component being configured to control the at least one functional element includes being configured to control an indicator to provide a user-perceptible feedback that indicates the temperature of the atomizer measured or determined from the property measured by the temperature sensor.
